# EUROPEAN PATENT APPLICATION

(11) **EP 4 610 772 A1**
(43) Date of publication of application: **03.09.2025**
(21) Application number: 25150437.9
(22) Date of filing: 07.01.2025
(51) Int. Cl.: G06F 1/16, H04M 1/02

(54) **ELECTRONIC APPARATUS**

(30) Priority: 29.02.2024 JP 2024029879
(71) Applicant: Lenovo (Singapore) Pte. Ltd, New Tech Park 556741 (SG)
(72) Inventor: HORIUCHI, Shigehiro, Yokohama-shi, 220-0012 (JP); YAMAUCHI, Takehito, Yokohama-shi, 220-0012 (JP); NAKANISHI, So, Yokohama-shi, 220-0012 (JP); USHIODA, Tatsuya, Yokohama-shi, 220-0012 (JP)
(74) Representative: Openshaw & Co.

(57) **Abstract**

There is provided an electronic apparatus capable of narrowing a bezel width while suppressing a glass plate from being broken or damaged. The electronic apparatus includes a display panel having a display surface and a rear surface on a side opposite to the display surface, a chassis member configured to support the rear surface of the display panel on an inner surface of the chassis member and having a standing wall having a receiving surface formed on an edge portion facing the display panel, a glass plate configured to cover the display surface of the display panel and having an outer edge portion that protrudes from an outer peripheral side surface of the display panel, in which an edge surface of the outer edge portion faces the standing wall with a gap, and a resin member forming a protruding portion on a back side of the outer edge portion of the glass plate without being interposed in the gap between the standing wall and the edge surface, with the protruding portion locked by the receiving surface.

## Description

### BACKGROUND OF THE INVENTION

### Field of the Invention

The present invention relates to an electronic apparatus including a display panel.

### Description of the Related Art

An electronic apparatus such as a laptop PC includes a display panel configured with a liquid crystal display or the like. For example, Japanese Unexamined Patent Application Publication No. 2023-005541 discloses a configuration in which a display panel is supported by the inner surface of a chassis member having standing walls on the edge portions thereof.

### SUMMARY OF THE INVENTION

In the configuration of Japanese Unexamined Patent Application Publication No. 2023-005541, a display surface of a display panel is covered with a glass plate. In this configuration, a bezel member made of a resin is interposed between the edge surface of the glass plate and the standing wall. The bezel member can suppress the glass plate from colliding with the standing wall and being broken or damaged when the display panel is attached to the chassis member or when the electronic apparatus is dropped.

Incidentally, it is desired that the bezel width surrounding the outer circumference of the display panel be configured to be as narrow as possible to improve the appearance quality. In the configuration of Japanese Unexamined Patent Application Publication No. 2023-005541, the bezel width is increased by the thickness of the bezel member interposed between the glass plate and the standing wall. On the other hand, in a case in which the bezel member is eliminated from this configuration, there is a concern that the glass may directly interfere with the standing wall and be broken or damaged.

The present invention has been made in consideration of the problems in the related art described above, and aims to provide an electronic apparatus that can narrow the bezel width while suppressing the glass plate from being broken or damaged.

An electronic apparatus according to an aspect of the present invention includes a display panel having a display surface and a rear surface on a side opposite to the display surface, a chassis member configured to support the rear surface of the display panel on an inner surface of the chassis member and having a standing wall having a receiving surface formed on an edge portion facing the display panel, a glass plate configured to cover the display surface of the display panel and having an outer edge portion that protrudes from an outer peripheral side surface of the display panel, in which an edge surface of the outer edge portion faces the standing wall with a gap, and a resin member forming a protruding portion on a back side of the outer edge portion of the glass plate without being interposed in the gap between the standing wall and the edge surface, with the protruding portion locked by the receiving surface.

According to the above-described aspect of the present invention, it is possible to narrow the bezel width while suppressing the glass plate from being broken or damaged.

### BRIEF DESCRIPTION OF THE DRAWINGS

FIG. 1 is a schematic plan view of an electronic apparatus according to an embodiment as viewed from above.
FIG. 2 is a schematic front view of a chassis member.
FIG. 3 is a rear view of a display assembly.
FIG. 4 is a schematic side cross-sectional view of a first chassis taken along a line IV-IV in FIG. 2.
FIG. 5 is a schematic side cross-sectional view of the first chassis taken along a line V-V in FIG. 2.
FIG. 6 is a schematic perspective view showing an enlarged view of a bulging portion and a peripheral portion thereof.
FIG. 7 is a schematic cross-sectional view showing an operation of attaching a display assembly to a chassis member.
FIG. 8 is a schematic cross-sectional view of the first chassis including a stepped portion.
FIG. 9 is a schematic front view of a chassis member that does not have the bulging portion.
FIG. 10 is a rear view of the display assembly that can be attached to the chassis member shown in FIG. 9.

### DETAILED DESCRIPTION OF THE INVENTION

An electronic apparatus according to the present invention will be described in detail below with preferred embodiments with reference to the accompanying drawings.

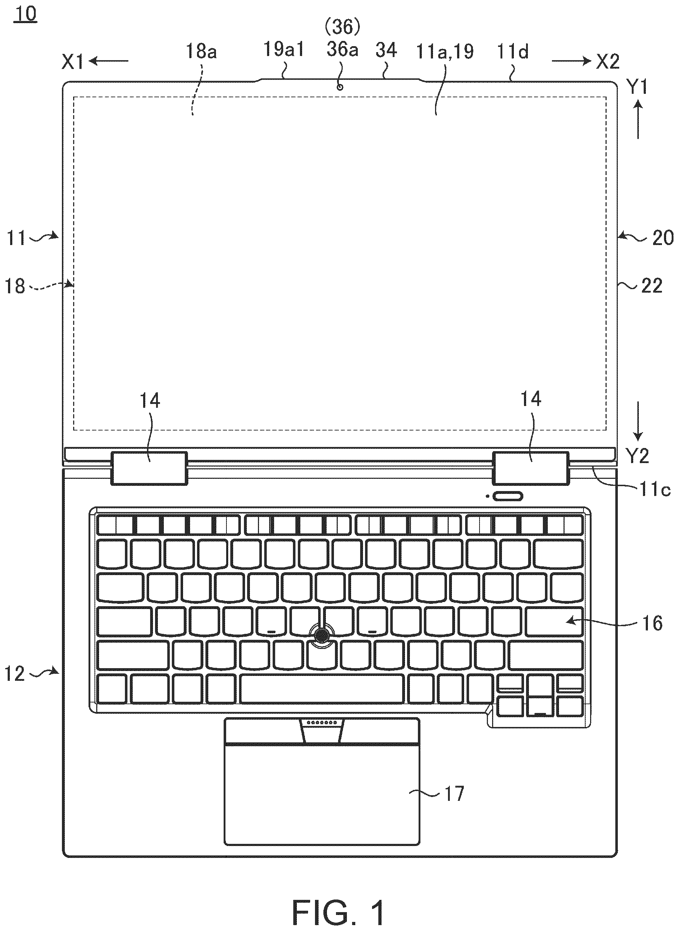

FIG. 1 is a schematic plan view of an electronic apparatus 10 according to an embodiment as viewed from above. The electronic apparatus 10 of the present embodiment has a configuration in which a first chassis 11 and a second chassis 12 are connected to each other by a hinge 14 to be rotationally movable relative to each other.

The electronic apparatus 10 of the present embodiment is a so-called convertible type PC that can be used as a laptop PC (laptop mode) or a tablet type PC (tablet mode) depending on an angular position between the chassis 11 and 12. The electronic apparatus 10 can set the chassis 11 and 12 at a desired angular position within an angular range of 0 degrees to 360 degrees. The 0 degrees is a position at which the surface directions of the chassis 11 and 12 are parallel to each other and a front surface 11a of the first chassis 11 and the surface (keyboard 16) of the second chassis 12 face each other. The 360 degrees is a position at which the surface directions of the chassis 11 and 12 are parallel to each other and a rear surface 11b of the first chassis 11 and the bottom surface (surface opposite to the keyboard 16 side) of the second chassis 12 face each other. The electronic apparatus 10 may be various electronic computers such as a general-purpose laptop PC or a tablet type PC having a single plate shape, which can be set at a desired angular position within an angular range of approximately 0 degrees to 180 degrees between the chassis 11 and 12, in addition to the convertible type PC.

The second chassis 12 is a flat box having a rectangular outer shape in a plan view, and is adjacent to the first chassis 11. Inside the second chassis 12, various electronic components such as a motherboard on which a CPU and the like are mounted, a battery device, a memory, an antenna device are accommodated. The keyboard 16 and a touch pad 17 face the upper surface of the second chassis 12.

The first chassis 11 has a rectangular outer shape in a plan view and is a flat box that is thinner than the second chassis 12. A display panel 18 is mounted on the first chassis 11.

Hereinafter, the first chassis 11 and each of the components mounted thereon will be described based on the direction as seen by a user viewing a display surface 18a of the display panel 18, with the left-right direction respectively referred to as X1 and X2 directions, the up-down direction respectively referred to as Y1 and Y2 directions, and the depth direction respectively referred to as Z1 and Z2 directions. The X1 and X2 directions are sometimes collectively referred to as the X direction, and the Y1 and Y2 directions and the Z1 and Z2 directions are sometimes similarly referred to as the Y direction and the Z direction.

The display surface 18a of the display panel 18 faces the Z1-side surface (front surface 11a) of the first chassis 11. The display surface 18a is the surface on which the video or image is displayed. The display panel 18 is configured with, for example, a liquid crystal display or an organic EL display. The display panel 18 has a structure in which, for example, glass, a liquid crystal layer, a light guide plate, or the like are laminated, and the outer peripheral edge portions of each layer are fixed to each other with a double-sided tape, an adhesive, or the like.

The display surface 18a of the display panel 18 is covered with a glass plate 19. The glass plate 19 is a cover glass that covers substantially the entire front surface 11a of the first chassis 11 including the display panel 18. The glass plate 19 can be configured with touch glass corresponding to a touch operation. The glass plate 19 may not support a touch operation.

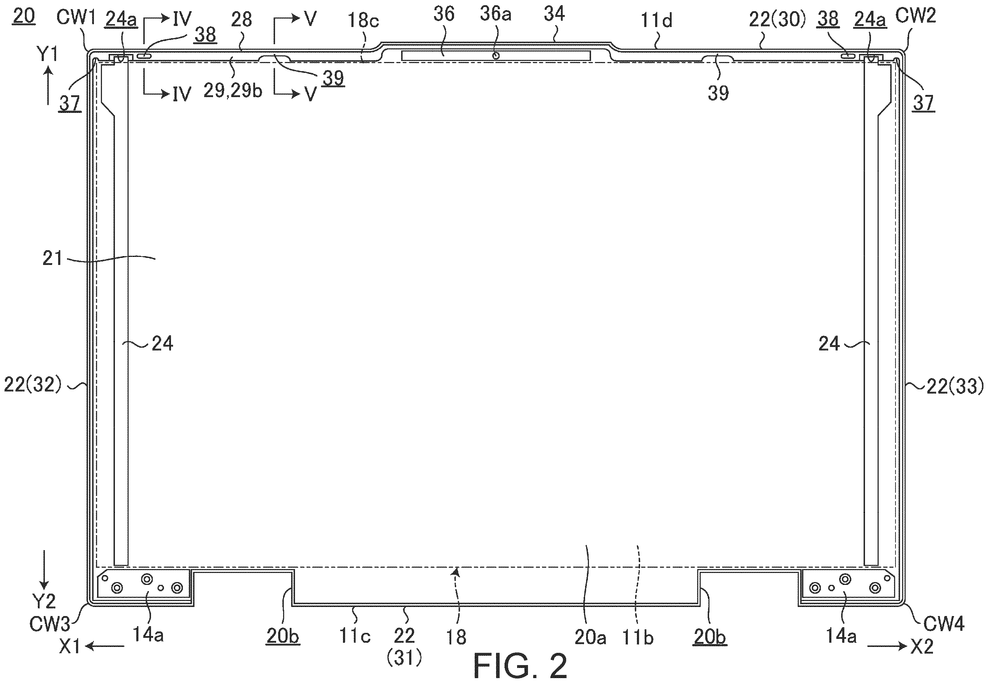

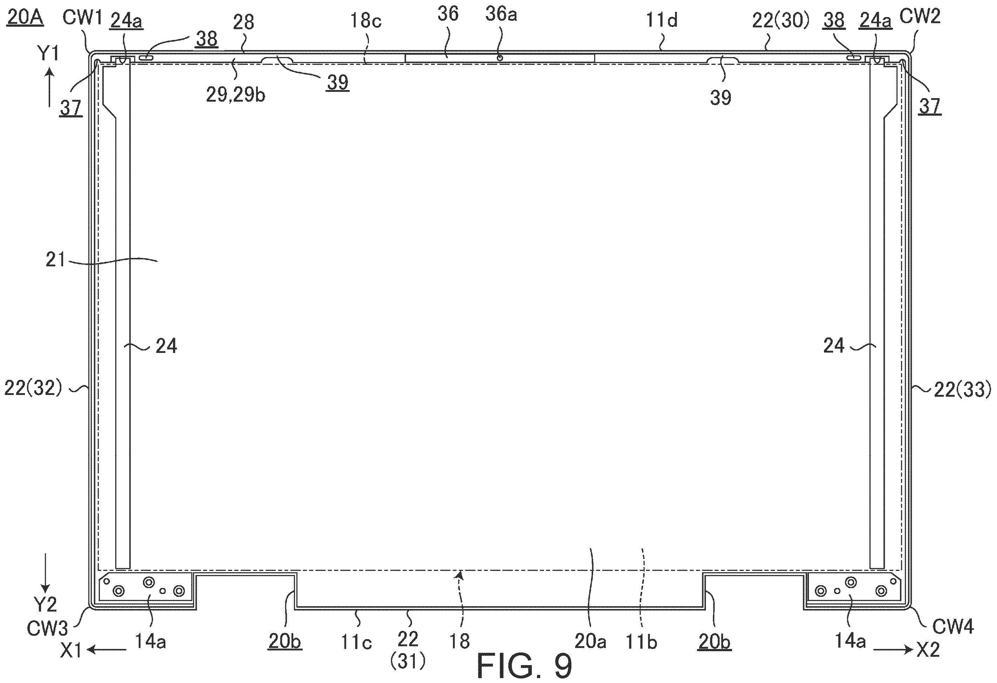

The first chassis 11 has a chassis member 20. FIG. 2 is a schematic front view of the chassis member 20. FIG. 2 shows an inner surface 20a (back surface of the rear surface 11b) of the chassis member 20 and predetermined components installed on the inner surface 20a, and FIG. 9 described below is also the same.

The chassis member 20 has a rectangular plate portion 21 and a standing wall 22 standing upright from the outer peripheral edge portion of the plate portion 21. The chassis member 20 has a shallow bathtub shape. The plate portion 21 forms the Z2-side surface (rear surface 11b) of the first chassis 11. The standing wall 22 is provided to surround most of the four sides of the plate portion 21 and stands in the Z1 direction. The chassis member 20 is made of, for example, metal and is formed of, for example, an aluminum alloy or a magnesium alloy. The chassis member 20 may be made of a resin. The chassis member 20 may be configured by joining a frame material that constitutes the standing wall 22 to the periphery of the plate portion 21 formed of, for example, a carbon fiber reinforced resin.

The chassis member 20 supports a rear surface 18b on a side opposite to the display surface 18a of the display panel 18 with the inner surface 20a. Specifically, the rear surface 18b of the display panel 18 is fixed to the inner surface 20a of the plate portion 21 by using a double-sided adhesive tape 24.

The hinge 14 is connected to the Y2-side edge portion (edge portion 11c) of the first chassis 11 in a pair of left and right directions. A reference numeral 14a in FIG. 2 denotes a hinge fixing portion to which the hinge 14 is fixed. In a case in which the chassis member 20 is made of metal, the hinge fixing portion 14a can form a screw thread by direct processing on the plate portion 21. In a case where the chassis member 20 is made of a resin, the hinge fixing portion 14a can be formed of a metal bracket to which the hinge 14 can be screwed. The chassis member 20 has a cutout portion 20b in which the hinge 14 is disposed on a side portion of the hinge fixing portion 14a.

The display panel 18 according to the present embodiment can be used as a display assembly 26 in which the glass plate 19 is fixed to the display surface 18a. As described above, the rear surface 18b of the display panel 18 is fixed to the chassis member 20 by the double-sided adhesive tape 24. In this case, the outer periphery of the glass plate 19 extends along the inner periphery of the standing wall 22. As a result, the display assembly 26 is attached to the chassis member 20.

Next, an assembly structure of the display assembly 26 with respect to the chassis member 20 will be described.

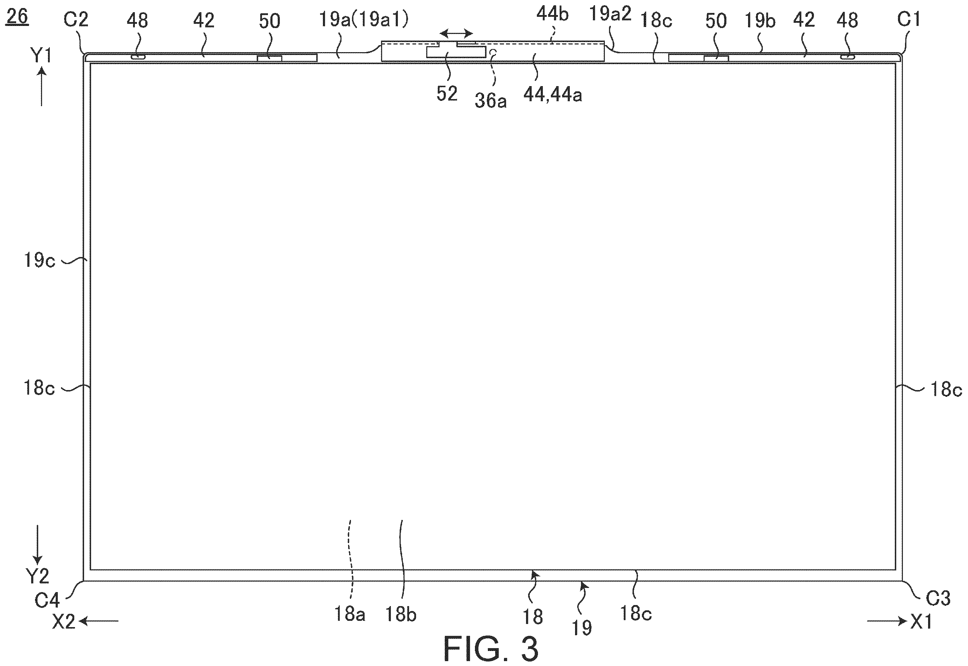

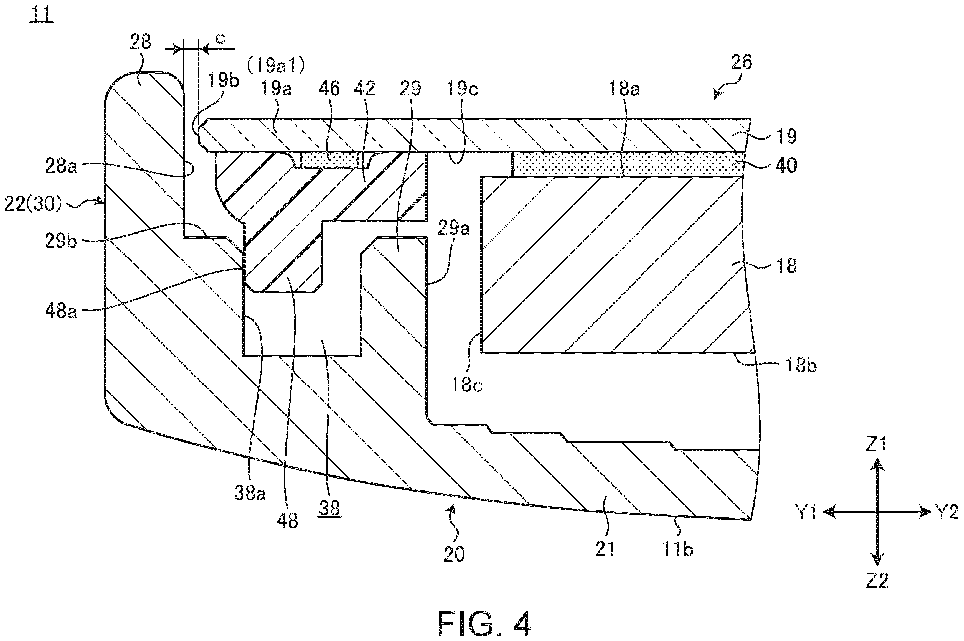

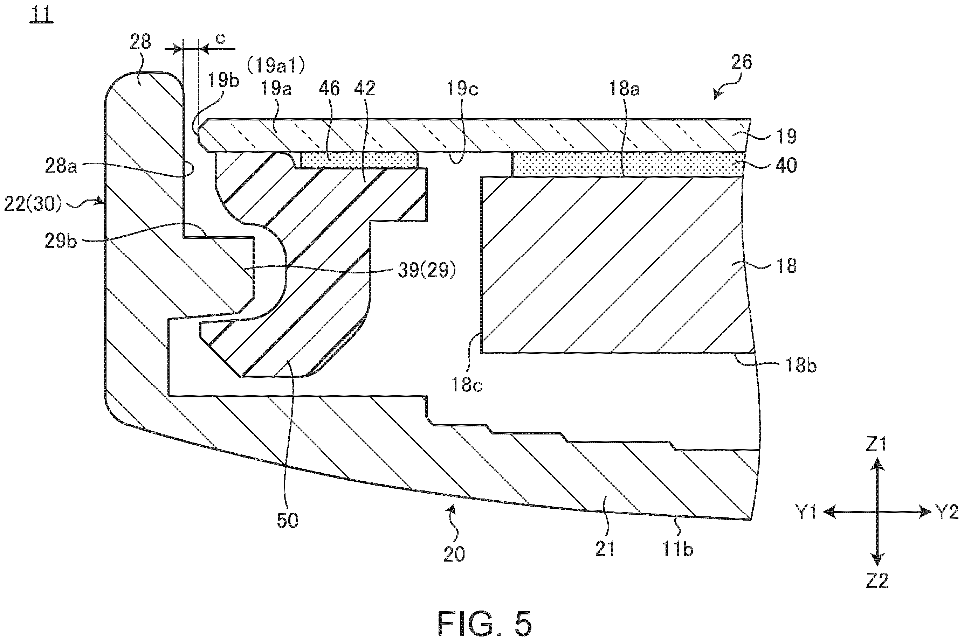

FIG. 3 is a rear view of the display assembly 26. FIG. 4 is a schematic side cross-sectional view of the first chassis 11 taken along the line IV-IV in FIG. 2. FIG. 5 is a schematic side cross-sectional view of the first chassis 11 taken along the line V-V in FIG. 2.

As shown in FIGS. 2, 4, and 5, the standing wall 22 has a first portion 28 and a second portion 29.

The first portion 28 is a portion provided at an upper portion (distal end side) of the standing wall 22 in the standing direction (Z1 direction) from the plate portion 21. The first portion 28 has an interior wall surface 28a facing the inside of the first chassis 11. The interior wall surface 28a faces an edge surface 19b of the glass plate 19 with a predetermined gap C therebetween.

The second portion 29 is a portion that is provided below the first portion 28 in the standing direction of the standing wall 22. The plate thickness of the second portion 29 is larger than the plate thickness of the first portion. The second portion 29 is disposed to be under an outer edge portion 19a of the glass plate 19, which will be described later. The second portion 29 has an interior wall surface 29a facing the inside of the first chassis 11 and a support surface 29b facing the Z1 direction. The interior wall surface 29a faces an outer peripheral side surface 18c of the display panel 18 with a predetermined gap therebetween. The support surface 29b is a surface that protrudes from a lower end of the interior wall surface 28a of the first portion 28. The support surface 29b can support a resin member 42 described later.

The standing wall 22 has a pair of horizontal walls 30 and 31 extending in the X direction and a pair of vertical walls 32 and 33 extending in the Y direction. As a result, the standing wall 22 extends to surround the entire periphery of the first chassis 11. The second portion 29 is provided on at least the horizontal wall 30 on the Y1 side, but may be similarly provided on the other walls 31 to 33.

One horizontal wall 30 constitutes the Y1-side edge portion (edge portion 11d) of the first chassis 11. The horizontal wall 30 extends over substantially the entire length of the edge portion 11d. The first chassis 11 of the present embodiment has a bulging portion 34 that bulges outward (Y1 side) at a central portion of the edge portion 11d in the longitudinal direction. The bulging portion 34 expands a space between the standing wall 22 (horizontal wall 30) and the outer peripheral side surface 18c of the display panel 18, and secures an installation space for a high-performance camera module 36. The camera module 36 includes a camera lens 36a. The camera lens 36a is a camera that can be used for video capturing or the like, has a lens for focusing in the center, and has an image sensor provided on a back side of the lens. The camera module 36 can further include an IRLED (infrared camera), an illuminance sensor, and the like.

A pair of left and right recessed portions 38 and 38 and a pair of left and right engaged portions 39 and 39 are formed on the support surface 29b of the horizontal wall 30.

The recessed portion 38 is a hole formed in the support surface 29b. The recessed portion 38 has, for example, a flat elliptical shape extending in the X direction (see FIG. 2). A wall surface of the recessed portion 38 facing the display panel 18 side (Y1 side) forms a receiving surface 38a that locks a protruding portion 48 of a resin member 42 described later. The engaged portion 39 has a shape in which the second portion 29 of the horizontal wall 30 is cut out in the Y1 direction. The engaged portion 39 is a short plate piece that protrudes in the Y2 direction from a lower end of the interior wall surface 28a of the first portion 28.

The other horizontal wall 31 constitutes the edge portion 11c of the first chassis 11. The horizontal wall 31 may have cutouts or the like at various locations. As a result, the horizontal wall 31 can form an installation space of a wiring line that connects the components of the hinge 14 and the chassis 11 and 12.

The vertical walls 32 and 33 extend along the Y direction and are perpendicular to the horizontal walls 30 and 31, respectively. As a result, corner wall portions CW1 to CW4 are formed at the four corners of the standing wall 22.

Although details will be described later, it is preferable that the left and right recessed portions 38 are respectively disposed at positions as close to the corner wall portions CW1 and CW2 as possible. As shown in FIG. 2, the horizontal wall 30 of the present embodiment has a recess 24a on a side of the corner wall portions CW1 and CW2. The recess 24a is formed by cutting out a part of the support surface 28b in the Y1 direction. The recess 24a can be used to dispose the end portions of the double-sided adhesive tape 24. In the horizontal wall 30, a recess 37 in which the support surface 29b is cut out in an arc shape in the Y1 direction is further formed between the recess 24a and the corner wall portions CW1 and CW2. The recess 37 is an escape portion for preventing the corners of the display panel 18 from colliding with the standing wall 22 due to an impact when the electronic apparatus 10 is dropped on a floor surface or the like. The left and right recessed portions 38 are disposed at positions as far as possible from the corner wall portions CW1 and CW2 at positions at which the recesses 24a and 37 do not interfere with the recessed portions 38.

As shown in FIGS. 3 to 5, the display assembly 26 is a laminate in which the glass plate 19 is fixed to the display surface 18a of the display panel 18.

The glass plate 19 can be fixed by an adhesive member 40 that is transparent to the display surface 18a. The surface area of the glass plate 19 is slightly larger than the surface area of the display panel 18. Therefore, the glass plate 19 has an eave-like outer edge portion 19a that protrudes outward from the outer peripheral side surface 18c of the display panel 18.

In the glass plate 19, the edge surface 19b of the outer edge portion 19a faces the interior wall surface 28a of the standing wall 22 with the gap C therebetween. The gap C is, for example, 0.2 mm. Specifically, in the foursided standing wall 22, the horizontal wall 30 on the Y1 side and the left and right vertical walls 32 and 33 face the edge surface 19b with the gap C between the interior wall surface 28a of the first portion 28 and the edge surface 19b. Since the hinge 14 or the components related to the wiring line are disposed between the edge surface 19b and the horizontal wall 31 on the Y2 side, the gap between the interior wall surface 28a and the edge surface 19b is wide, for example, 10 mm or more.

Corner portions C1 to C4 that are curved along the corner wall portions CW1 to CW4 of the chassis member 20 are formed at four corners of the glass plate 19. The corner portions C1 and C2 provided at one end and the other end of the outer edge portion 19a on the Y1 side in the longitudinal direction face the interior wall surfaces 28a of the corner wall portions CW1 and CW2 with the gap C therebetween. The corner portions C3 and C4 provided at both ends of the outer edge portion 19a on the Y2 side are disposed with the same gap as the wide gap (for example, 10 mm or more) between the corner wall portions CW3 and CW4 and the horizontal wall 31 described above.

The display assembly 26 further includes a pair of left and right resin members 42 and 42 and a bezel member 44. The resin member 42 and the bezel member 44 can be fixed to a back surface 19c of the outer edge portion 19a of the glass plate 19 on the Y1 side by using an adhesive member 46. The adhesive member 46 can be exemplified by a double-sided adhesive tape, an adhesive, or a bonding agent. Hereinafter, the outer edge portion 19a of the glass plate 19 that extends in the X direction on the Y1 side may be referred to as an "outer edge portion 19a1". A bulging portion 19a2 corresponding to the shape of the bulging portion 34 is formed on the outer edge portion 19a1 on the Y1 side at a central portion in the longitudinal direction.

As shown in FIGS. 3 to 5, the resin member 42 is a strip-shaped resin part extending in the X direction. The resin member 42 on the X1 side extends from a position close to the corner portion C1 to the front of the bulging portion 19a2. The resin member 42 on the X2 side extends from a position close to the corner portion C2 to the front of the bulging portion 19a2. Each resin member 42 is fixed to the back surface 19c and is not interposed in the gap C between the interior wall surface 28a of the standing wall 22 and the edge surface 19b of the glass plate 19. The resin member 42 is disposed on the support surface 29b of the horizontal wall 30 with a slight gap.

Each resin member 42 has the protruding portion 48 and a hook 50.

The protruding portion 48 is a rib that protrudes downward (Z2 direction) on the back surface 19c side of the glass plate 19. The protruding portion 48 has, for example, a flat elliptical shape extending in the X direction (see FIG. 3). The protruding portion 48 has a size that allows the protruding portion 48 to be inserted into the recessed portion 38 on the standing wall 22 side. In a state in which the display assembly 26 is attached to the chassis member 20, the protruding portions 48 of the respective resin members 42 are inserted into the left and right recessed portions 38. In this state, the protruding portion 48 abuts against the receiving surface 38a of the recessed portion 38 at a stopper surface 48a. The stopper surface 48a is a surface facing a side (Y1 side) opposite to the display panel 18 side. As a result, the protruding portion 48 restricts the movement of the display assembly 26 in the Y1 direction. That is, the protruding portion 48 can prevent the edge surface 19b of the outer edge portion 19a1 from coming into contact with the interior wall surface 28a.

The hook 50 is a claw-like protrusion. The hook 50 protrudes downward on the back surface 19c side of the glass plate 19 and then is bent toward the standing wall 22 side (Y1 side). The hook 50 can be disengaged from the engaged portion 39 on the standing wall 22 side. As a result, the hook 50 prevents the display assembly 26 from falling off from the chassis member 20 in the Z1 direction.

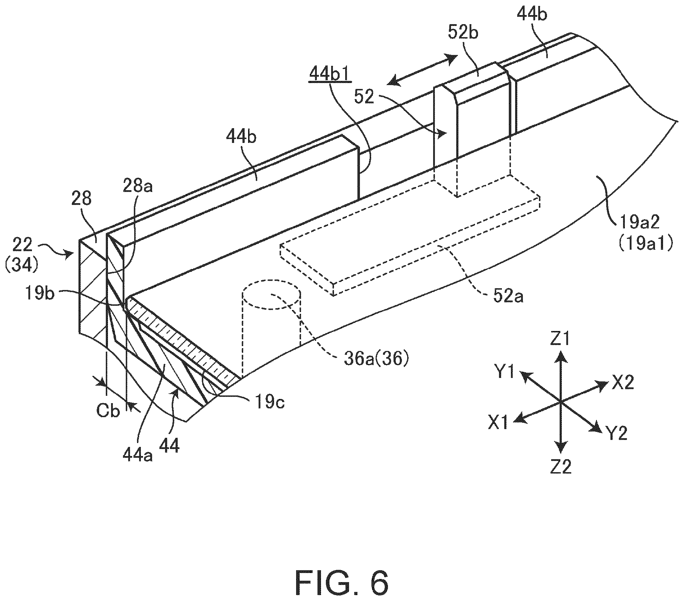

FIG. 6 is an enlarged schematic perspective view of the bulging portion 34 and a peripheral portion thereof.

As shown in FIGS. 3 and 6, the bezel member 44 is a strip-shaped resin part extending in the X direction. The bezel member 44 is provided on the back surface 19c of the glass plate 19 between the left and right resin members 42 and 42. The bezel member 44 has a plate portion 44a and a bezel portion 44b, and has a substantially L-shaped cross-sectional shape.

The plate portion 44a is fixed to the back surface 19c of the bulging portion 19a2 that covers the bulging portion 34 of the chassis member 20. The plate portion 44a is provided to cover the upper side (Z1 side) of the camera module 36.

The bezel portion 44b is a thin plate having a standing wall shape that stands up in the Z1 direction from an edge portion of the plate portion 44a on the Y1 side. The bezel portion 44b is interposed in a gap Cb between the interior wall surface 28a of the standing wall 22 located at the bulging portion 34 and the edge surface 19b of the glass plate 19 (see FIG. 6). The gap Cb is larger than the gap C described above and is required to be, for example, about 0.5 mm to 1 mm.

The camera shutter 52 is supported by the bezel member 44 to be slidable in the X direction. The camera shutter 52 is a shutter member that is capable of opening and closing at least the camera lens 36a. The camera shutter 52 includes a shutter portion 52a and an operation knob 52b.

The shutter portion 52a is slidable in the X direction on the lower side (Z2 side) of the plate portion 44a. The operation knob 52b stands up from the Y1-side edge portion of the shutter portion 52a in the Z1 direction. The operation knob 52b can be slid in the X direction by hand. The camera shutter 52 can be switched between the closed position and the open position by moving the operation knob 52b in the X direction. The closed position is a position at which the shutter portion 52a covers the camera lens 36a. The open position is a position at which the shutter portion 52a does not cover the camera lens 36a.

As shown in FIG. 6, the bezel portion 44b has a defective portion 44b1 in which a part of the bezel portion 44b in the longitudinal direction is cut out. The operation knob 52b is disposed in the defective portion 44b1 and is movable in the X direction in the defective portion 44b1. As a result, the operation knob 52b appears to be a part of the bezel portion 44b and is not noticeable in appearance.

As described above, in the electronic apparatus 10 of the present embodiment, the bezel member is not interposed between the horizontal wall 30 excluding the bulging portion 34 and the glass plate 19, between the horizontal wall 31 and the glass plate 19, and between the vertical walls 32 and 33 and the glass plate 19. Therefore, the bezel width between the horizontal wall 30 excluding at least the bulging portion 34 and the glass plate 19 and between the vertical walls 32 and 33 and the glass plate 19 is extremely narrow.

On the other hand, the bezel portion 44b of the bezel member 44 is interposed between the standing wall 22 positioned at the bulging portion 34 and the glass plate 19. The bezel portion 44b can have the function of preventing the operation knob 52b from being noticeable in appearance. Further, the bezel portion 44b can also have a function of preventing the operation knob 52b protruding from the surface of the glass plate 19 from being broken.

The electronic apparatus 10 can be configured not to have the camera shutter 52. The electronic apparatus 10 can also have a configuration in which the operation knob 52b does not protrude from the surface (front surface 11a) of the glass plate 19. In a case of these configurations, the bezel member 44 can be configured with a resin part that does not have the bezel portion 44b, or the bezel member 44 itself can be omitted.

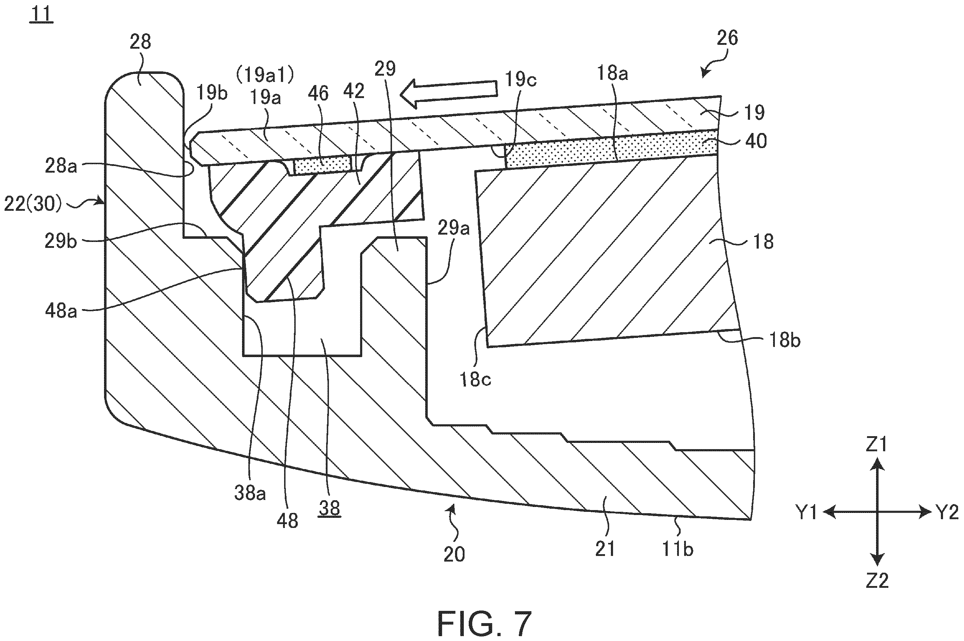

Next, an operation of attaching the display assembly 26 to the chassis member 20 and an action and effect of the electronic apparatus 10 will be described. FIG. 7 is a schematic cross-sectional view showing an operation of attaching the display assembly 26 to the chassis member 20.

As shown in FIG. 7, the display assembly 26 is in a posture in which the outer edge portion 19a1 of the glass plate 19 is slightly lowered, and the stopper surface 48a of the protruding portion 48 abuts against the receiving surface 38a of the recessed portion 38. In this case, in the display assembly 26, the stopper surface 48a abuts against the receiving surface 38a before the edge surface 19b of the outer edge portion 19a1 comes into contact with the interior wall surface 28a of the horizontal wall 30. When the stopper surface 48a abuts against the receiving surface 38a, the hook 50 is engaged with the engaged portion 39 substantially at the same time. Before this process, the release paper around the edge portion on the Y1 side of the double-sided adhesive tape 24 is peeled off to expose the adhesive surface with respect to the rear surface 18b of the display panel 18.

In this case, the display assembly 26 is positioned in the Y direction with respect to the chassis member 20 at the Y1-side edge portion. Further, a part of the display panel 18 is fixed to the inner surface 20a of the chassis member 20 by the double-sided adhesive tape 24. Therefore, the release paper of the double-sided adhesive tape 24 is completely peeled off, and the entire display assembly 26 is lowered. As a result, the display assembly 26 is attached to the chassis member 20 in a state in which the entire display assembly 26 is positioned in the XY direction.

As described above, the electronic apparatus 10 of the present embodiment can include the chassis member 20 that supports the rear surface 18b of the display panel 18 with the inner surface 20a and has the standing wall 22 in which the receiving surface 38a facing the direction of the display panel 18 is formed at the edge portion. The electronic apparatus 10 can further include the glass plate 19 having the outer edge portion 19a that protrudes from the outer peripheral side surface 18c of the display panel 18 and the edge surface 19b that faces the standing wall 22 with the gap C therebetween. The electronic apparatus 10 can further include the resin member 42 that forms the protruding portion 48 on the back surface 19c side of the outer edge portion 19a of the glass plate 19 without being interposed in the gap C between the standing wall 22 and the edge surface 19b, with the protruding portion 48 locked by the receiving surface 38a.

As described above, in the electronic apparatus 10, in a state in which the stopper surface 48a abuts against the receiving surface 38a, the gap C is secured between the glass plate 19 and the standing wall 22 (see FIG. 4). Therefore, in the electronic apparatus 10, when the display assembly 26 is attached to the chassis member 20, the stopper surface 48a abuts against the receiving surface 38a before the edge surface 19b comes into contact with the interior wall surface 28a. As a result, in the electronic apparatus 10, it is possible to suppress the edge surface 19b of the glass plate 19 from colliding with the standing wall 22 and being broken or damaged by mistake when the display assembly 26 is attached.

Further, when the electronic apparatus 10 is accidentally dropped on a floor surface or the like, it is possible to suppress the glass plate 19 from being broken or the like even in a case in which the impact is applied to the corner wall portions CW1, CW2, and the like. This is because the stopper surface 48a and the receiving surface 38a abut with each other, and thus the interior wall surface 28a of the standing wall 22 can be prevented from colliding with the edge surface 19b of the glass plate 19 in the electronic apparatus 10.

Moreover, when at least the bulging portion 34 is removed, the bezel member is not interposed between the edge surface 19b of the glass plate 19 and the interior wall surface 28a of the standing wall 22 in the electronic apparatus 10. As a result, the gap C can be extremely narrowed to, for example, 0.2 mm. The gap C is significantly smaller than the gap Cb in which the bezel portion 44b is interposed as described above. As a result, the electronic apparatus 10 can narrow the width (bezel width) between the display assembly 26 and the standing wall 22, and the appearance quality is improved.

As shown in FIGS. 2 and 3, the protruding portion 48 and the receiving surface 38a can be respectively provided at positions close to the corner portions C1 and C2 at both ends of the outer edge portion 19a1, respectively. In this case, even in a case in which the display assembly 26 is in a posture inclined to some extent in the surface direction (XY direction) when the display assembly 26 shown in FIG. 7 is attached, one of the left and right protruding portions 48 abuts against the receiving surface 38a reliably. Therefore, it is possible to further suppress the glass plate 19 from being broken or the like when the display assembly 26 is attached.

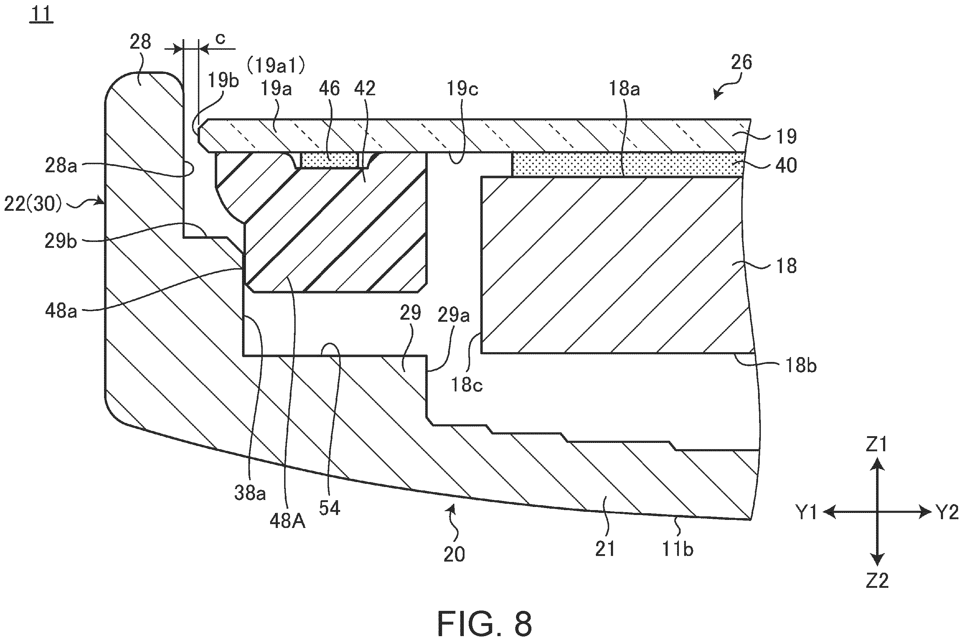

The receiving surface 38a may have a configuration other than the configuration of the recessed portion 38 as long as the receiving surface 38a can receive the protruding portion 48 of the display assembly 26. FIG. 8 is a schematic cross-sectional view of the first chassis 11 including a stepped portion 54 instead of the recessed portion 38.

The stepped portion 54 shown in FIG. 8 forms the receiving surface 38a instead of the recessed portion 38. The stepped portion 54 is not a hole formed in the support surface 29b as in the recessed portion 38, but is a stepped portion obtained by cutting out a part of the second portion 29 of the horizontal wall 30 from the interior wall surface 28a side toward the Y1 side. A surface of the stepped portion 54 facing the display panel 18 side (Y1 side) also forms the receiving surface 38a.

Therefore, even in the configuration in which the stepped portion 54 is used, the stopper surface 48a of the protruding portion 48 on the display assembly 26 side is locked by the receiving surface 38a, and it is possible to suppress the glass plate 19 from being broken or the like.

As shown in FIG. 8, in the configuration using the stepped portion 54, a protruding portion 48A can also be used instead of the rib-shaped protruding portion 48 formed on the resin member 42. The protruding portion 48A has a configuration in which substantially the entire resin member 42 protrudes downward, and a Y1 side surface thereof is the stopper surface 48a. In other words, the protruding portion 48A is formed by using the thickness of the resin member 42 as it is.

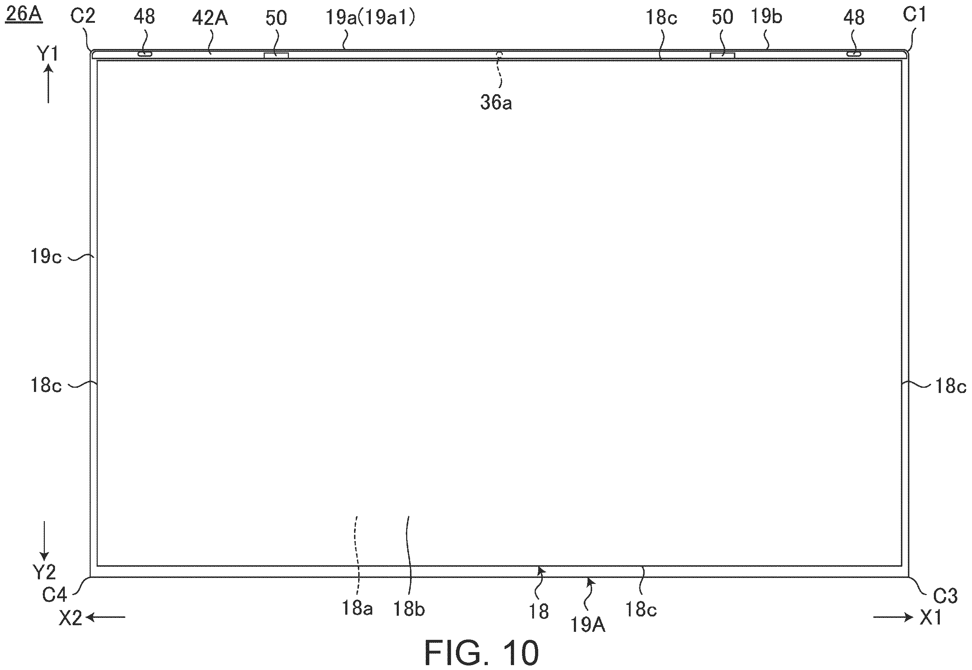

In the above description, the configuration in which the first chassis 11 includes the bulging portion 34 has been exemplified, but the bulging portion 34 can also be omitted. FIG. 9 is a schematic front view of a chassis member 20A that does not have the bulging portion 34. FIG. 10 is a rear view of the display assembly 26A that can be attached to the chassis member 20A shown in FIG. 9.

The chassis member 20A shown in FIG. 9 does not have the bulging portion 34. Therefore, the chassis member 20A has the standing wall 22 (horizontal wall 30) along the edge portion 11d that extends linearly over the entire length. The recessed portion 38 and the engaged portion 39 are also formed in the horizontal wall 30 of the chassis member 20A. The camera module 36 can be disposed in a space obtained by resecting, for example, the second portion 29 in a range including the center of the horizontal wall 30 in the longitudinal direction.

The display assembly 26A shown in FIG. 10 does not have the bulging portion 19a2. Therefore, in the glass plate 19 of the display assembly 26A, the outer edge portion 19a1 extends linearly over the entire length. In the display assembly 26A, the bezel member 44 can be omitted.

In the first chassis 11 using the chassis member 20A and the display assembly 26A, the narrow gap C can be formed between the glass plate 19 and the standing wall 22 over the entire length of the edge portion 11d. The bezel member 44 can also be used in the display assembly 26A.

In the display assembly 26A shown in FIG. 10, for example, one long resin member 42A that extends along the substantially entire length of the outer edge portion 19a1 can also be used instead of the resin member 42. Since the pair of protruding portions 48 (48A) and the pair of hooks 50 can be formed in the resin member 42A, the number of components can be reduced. In addition, a pair of left and right resin members 42 can also be used for the display assembly 26A.

The present invention is not limited to the above-described embodiment, and it goes without saying that the present invention can be freely modified without departing from the gist of the present invention.

### Description of Symbols

10 electronic apparatus
11 first chassis
12 second chassis
14 hinge
18 display panel
19 glass plate
19a, 19a1 outer edge portion
19b edge surface
20, 20A chassis member
22 standing wall
26, 26A display assembly
28a, 29a interior wall surface
36a camera lens
38 recessed portion
38a receiving surface
42, 42A resin member
44 bezel member
48, 48A protruding portion
48a stopper surface
52 camera shutter
54 stepped portion
C1 to C4 corner portion
CW1 to CW4 corner wall portion

## Claims

1. An electronic apparatus (10) comprising:
a display panel (18) comprising a display surface (18a) and a rear surface (18b) on a side opposite to the display surface;
a chassis member (20) configured to support the rear surface of the display panel on an inner surface (20a) of the chassis member and comprising a standing wall (22) comprising a receiving surface (38a) formed on an edge portion facing the display panel;
a glass plate (19) configured to cover the display surface of the display panel and comprising an outer edge portion (19a) that protrudes from an outer peripheral side surface (18c) of the display panel, wherein an edge surface of the outer edge portion faces the standing wall with a gap; and
a resin member (42) forming a protruding portion (48) on a back side of the outer edge portion of the glass plate without being interposed in the gap between the standing wall and the edge surface, with the protruding portion locked by the receiving surface.

2. The electronic apparatus according to claim 1, wherein
the standing wall comprises:
a first portion (28) that is located at an upper portion in a standing direction of the standing wall and faces an edge surface of the glass plate; and
a second portion (29) that is located below the first portion to protrude toward a display panel side and is disposed below the resin member,
wherein the second portion comprises a recessed portion (38) or a stepped portion (54), and
one wall surface of the recessed portion or the stepped portion forms the receiving surface.

3. The electronic apparatus according to claim 1 or 2, wherein
the glass plate comprises a pair of corner portions (C1, C2) located at one end and the other end of the outer edge portion in a longitudinal direction, and
the protruding portion and the receiving surface are located at positions closer to the pair of corner portions than a center in a direction along the longitudinal direction of the outer edge portion, respectively.

4. The electronic apparatus according to claim 3, wherein
a pair of the resin members is provided, and
the protruding portion is arranged on each of the pair of resin members.

5. The electronic apparatus according to claim 4, wherein
the chassis member comprises a bulging portion (34) in which the standing wall in a range facing a portion including a center of an outer edge portion of the glass plate in a longitudinal direction bulges in a direction away from the display panel, and
the electronic apparatus further includes:
a camera lens (36a) located in the bulging portion;
a camera shutter (52) that includes an operation knob (52b) and is capable of opening and closing the camera lens; and
a bezel member (44) that is interposed between the standing wall positioned in the bulging portion and the edge surface of the glass plate, and wherein
the bezel member comprises a defective portion (44b1) that extends along a longitudinal direction of the standing wall positioned in the bulging portion, with a part of the operation knob configured to be movable.

6. The electronic apparatus according to any preceding claim, further comprising:
a first chassis comprising the chassis member and comprising a rectangular outer shape;
a second chassis comprising a rectangular outer shape and adjacent to the first chassis; and
a hinge (14) configured to connect one edge portion of the first chassis and one edge portion of the second chassis such that the first chassis and second chassis are rotationally movable relative to each other, wherein
the standing wall comprises:
a pair of vertical walls (32, 33) that extend along a direction perpendicular to the one edge portion of the first chassis to which the hinge is connected; and
a horizontal wall (30) that extends to be perpendicular to the pair of vertical walls on a side opposite to the one edge portion of the first chassis to which the hinge is connected, and wherein
the receiving surface is formed on the horizontal wall.
